# EUROPÄISCHE PATENTANMELDUNG

(11) **EP 4 016 027 A1**
(43) Veröffentlichungstag der Anmeldung: **22.06.2022**
(21) Anmeldenummer: 21204873.0
(22) Anmeldetag: 26.10.2021
(51) Int. Cl.: G01L 1/16, G01L 3/10, H01L 41/113, H03H 9/21

(54) **VORRICHTUNG ZUR ERFASSUNG VON MECHANISCHEN NORMALSPANNUNGEN IN EINEM ELASTOMERBAUTEIL SOWIE NORMALSPANNUNGSSENSOR HIERFÜR**

(30) Priorität: 18.12.2020 DE 102020216234
(71) Anmelder: ContiTech Antriebssysteme GmbH, 30165 Hannover (DE)
(72) Erfinder: RECK, Siegfried, 30419 Hannover (DE); FISS, Tim, 30419 Hannover (DE)
(74) Vertreter: Continental Corporation

(57) **Zusammenfassung**

Die vorliegende Erfindung betrifft eine Vorrichtung zur Erfassung von mechanischen Normalspannungen (A) in einem Elastomerbauteil (3) mit einem Elastomerbauteil (3), mit wenigstens einem Normalspannungssensor (1), wobei der Normalspannungssensor (1) wenigstens einen Resonator (10) aufweist, dessen Eigenfrequenz von den zu erfassenden mechanischen Normalspannungen (A), vorzugsweise zumindest im Wesentlichen linear, abhängig ist, wobei wenigstens der Resonator (10) derart in das Elastomerbauteil (3) eingebettet ist, dass auf das Elastomerbauteil (3) wirkende mechanische Normalspannungen (A) die Eigenfrequenz des Resonators (10) verändern können, und mit wenigstens einer Steuerungseinheit (2), welche ausgebildet ist, den Resonator (10) zu Schwingungen in dessen Eigenfrequenz anzuregen und dessen Schwingungen zu erfassen, wobei die Steuerungseinheit (2) ferner ausgebildet ist, aus den erfassten Schwingungen des Resonators (10) die mechanischen Normalspannungen (A) des Elastomerbauteils (3) zu bestimmen.

## Beschreibung

Die vorliegende Erfindung betrifft eine Vorrichtung zur Erfassung von mechanischen Normalspannungen in einem Elastomerbauteil gemäß dem Patentanspruch 1, einen Normalspannungssensor zur Verwendung in einer derartigen Vorrichtung gemäß dem Patentanspruch 9 sowie eine Steuerungseinheit zur Verwendung in einer derartigen Vorrichtung gemäß dem Patentanspruch 10.

Um mechanische Normal- und Scherspannungen zu messen, müssen die Messwandler so in das Bauteil integriert werden, dass sie den zu messenden Kraftfluss erfassen können. Ist dieser Kraftfluss inhomogen, sind üblicherweise flächige Sensoren notwendig. Druckmessfolien auf elastomerer Basis, die für jeweils eine Messung in das Bauteil eingefügt werden, bilden die Verteilung der aufgetretenen Maximalspannungen durch Farbveränderungen ab. Dies ist üblicherweise jedoch ungenau, kann nicht elektronisch erfasst werden und es ist pro Messung jeweils eine unbenutzte Druckmessfolie zu verbauen, wieder zu entfernen und auszuwerten, was diese Art der Erfassung von Normal- und Scherspannungen unattraktiv macht.

Mit Hilfe elektronischer Druckmessfolien lassen sich Normalspannungsverteilungen kontinuierlich sowie elektronisch vermessen. Beispielsweise eine Matrix aus piezoresistiven Messwandlern liefert die Daten für ein räumlich aufgelöstes Bild. Alternativ können sich dielektrische Elastomersensoren (DES) für die Messung von mechanischen Normalspannungen eignen.

Bis auf die dielektrischen Elastomersensoren eignen sich jedoch derartige bekannte Sensoren nur bedingt zur Messung von mechanischen Spannungen in elastomeren Körpern, weil die dielektrischen Elastomersensoren relativ großen Dehnungen nicht folgen können. Außerdem sind piezoresistive Druckmessfolien teuer, so dass sie vorzugsweise für diskontinuierliche Messungen verwendet werden.

Eine Aufgabe der vorliegenden Erfindung ist es, eine Vorrichtung zur kontinuierlichen sensorischen Erfassung von mechanischen Normalspannungen in elastomeren Bauteilen zu schaffen. Dies soll möglichst einfach, kostengünstig, bauraumsparend, langlebig, großflächig, für große mechanische Normalspannungen und bzw. oder flexibel einsetzbar umgesetzt werden können. Insbesondere soll der entsprechende Normalspannungssensor ohne Energiequelle und bzw. oder drahtlos betrieben werden können. Zumindest soll eine Alternative zu bekannten derartigen Vorrichtungen bzw. Normalspannungssensoren geschaffen werden.

Die Aufgabe wird erfindungsgemäß durch eine Vorrichtung mit den Merkmalen gemäß Patentanspruch 1, durch einen Normalspannungssensor mit den Merkmalen gemäß Patentanspruch 9 sowie durch eine Steuerungseinheit mit den Merkmalen gemäß Patentanspruch 10 gelöst. Vorteilhafte Weiterbildungen sind in den Unteransprüchen beschrieben.

Somit betrifft die vorliegende Erfindung eine Vorrichtung zur Erfassung von mechanischen Normalspannungen in einem Elastomerbauteil mit einem Elastomerbauteil, mit wenigstens einem Normalspannungssensor, wobei der Normalspannungssensor wenigstens einen Resonator aufweist, dessen Eigenfrequenz von den zu erfassenden mechanischen Normalspannungen, vorzugsweise zumindest im Wesentlichen linear, abhängig ist, wobei wenigstens der Resonator derart in das Elastomerbauteil eingebettet ist, dass auf das Elastomerbauteil wirkende mechanische Normalspannungen die Eigenfrequenz des Resonators verändern können, und mit wenigstens einer Steuerungseinheit, welche ausgebildet ist, den Resonator zu Schwingungen in dessen Eigenfrequenz anzuregen und dessen Schwingungen zu erfassen, wobei die Steuerungseinheit ferner ausgebildet ist, aus den erfassten Schwingungen des Resonators die mechanischen Normalspannungen des Elastomerbauteils zu bestimmen.

Mit anderen Worten kann erfindungsgemäß ein Resonator eines Normalspannungssensors geschaffen und in das Elastomerbauteil eingebettet werden, dessen mechanische Normalspannungen vom Resonator sensorisch erfasst werden sollen. Der Resonator kann entsprechend ausgebildet sein, dass mechanische Normalspannungen in Form von Druckkräften und bzw. oder Zugkräften dessen Schwingungsverhalten derart beeinflussen können, dass das Schwingungsverhalten des Resonators charakteristisch für die wirkenden mechanischen Normalspannungen sein kann. Wird nun der Resonator zu Schwingungen angeregt sowie das Schwingungsverhalten des Resonators erfasst und ausgewertet, kann hierdurch auf die anliegenden mechanischen Normalspannungen geschlossen werden. Hierdurch können mechanische Normalspannungen kontinuierlich sensorisch erfasst werden, welche innerhalb des Elastomerbauteils auftreten können.

Vorteilhaft ist hierbei insbesondere, dass sich ein derartiger Resonator zum Beispiel durch Vulkanisation oder durch Kleben einfach, schnell, positionsgenau und bzw. oder robust in das Elastomerbauteil integrieren bzw. einbetten lassen kann. Auch kann ein derartiger Resonator als einfaches Bauteil vergleichsweise kostengünstig zur Verfügung gestellt werden.

Gemäß einem Aspekt der Erfindung besteht der Resonator aus elastischen Materialien. Auf diese Art und Weise kann sich der Resonator den Bewegungen des Elastomerbauteils, welche durch die mechanischen Normalspannungen hervorgerufen werden können, flexibel anpassen und hierdurch die mechanische Normalspannungen vergleichsweise genau erfassen. Auch kann der Resonator aufgrund seiner elastischen Bauweise wesentlich stärkeren Dehnungen folgen als starre Messwandler.

Gemäß einem weiteren Aspekt der Erfindung ist der Resonator als hochfrequenter Resonator ausgebildet. Unter einem hochfrequenten Resonator wird ein Resonator verstanden, welcher im Frequenzbereich hochfrequenter Schwingungen arbeiten kann. Hierunter werden Frequenzen im Bereich einer Frequenz von 1 bis 300 GHz verstanden.

Vorteilhaft ist hieran, dass derart hohe Frequenzen entsprechend kleine Wellenlängen aufweisen und somit der Resonator mit vergleichsweise kleinen Abmessungen realisiert werden kann. Auf diese Art und Weise kann der vergleichsweise kleine Resonator auch in sehr kleine Elastomerbauteile integriert werden. Insgesamt kann ein kleiner Resonator es begünstigen, innerhalb von Elastomerbauteilen eingebettet zu werden.

Vorteilhaft ist hieran auch, dass aufgrund der hohen Frequenz keine Wechselwirkung zwischen dem elektromagnetischen Feld des Resonators und dem Elastomerbauteilen selbst auftreten kann, welche sich negativ auf die Funktionsweise auswirken könnte.

Vorteilhaft ist hieran ferner, dass aufgrund seiner hohen Arbeitsfrequenz der Resonator sehr empfindlich für das Messwertsignal und damit auf Normalkraft bzw. auf Druck sein kann. Dies kann die Messempfindlichkeit erhöhen.

Gemäß einem weiteren Aspekt der Erfindung weist der Resonator senkrecht zur Richtung der mechanischen Normalspannungen wenigstens ein Paar von elektrisch leitfähigen Leiterschichten auf, zwischen denen wenigstens ein Dielektrikum angeordnet ist, wobei im Dielektrikum wenigstens ein Leiterstreifen angeordnet ist, welcher sich parallel zu den elektrisch leitfähigen Leiterschichten erstreckt. Dies kann eine einfache Möglichkeit darstellen, einen Resonator mit den hier beschriebenen Eigenschaften und Vorteilen umzusetzen.

Gemäß einem weiteren Aspekt der Erfindung ist der Resonator sich flächig erstreckend ausgebildet, wobei der Resonator mit seiner flächigen Erstreckungsebene senkrecht zur Richtung der mechanischen Normalspannungen in das Elastomerbauteil eingebettet ist. Dies kann eine großflächige sensorische Erfassung der mechanischen Normalspannungen begünstigen, was die Qualität der sensorisch erfassten Werte verbessern kann.

Gemäß einem weiteren Aspekt der Erfindung weist der Normalspannungssensor eine Antenne auf, welche mittels eines elektrischen Verbindungselements elektrisch leitfähig mit dem Resonator verbunden ist, und die Steuerungseinheit weist eine Antenne zur Erzeugung eines elektromagnetischen Feldes zur elektromagnetischen Kopplung mit der Antenne des Normalspannungssensors auf. Auf diese Art und Weise können die Anregung des Resonators sowie das Erfassen des Schwingungsverhaltens drahtlos aus der Umgebung des Elastomerbauteils erfolgen. Dies kann die Flexibilität der Umsetzung der erfindungsgemäßen Vorrichtung begünstigen.

Gemäß einem weiteren Aspekt der Erfindung ist die Steuerungseinheit ausgebildet, den Resonator mittels breitbandiger Impulse zu Schwingungen in dessen Eigenfrequenz anzuregen, dessen Impulsantworten zu erfassen und aus den erfassten Impulsantworten die mechanischen Normalspannungen zu bestimmen. Dies kann eine Betriebsweise darstellen, den Resonator zu Schwingungen in seiner Eigenfrequenz anzuregen und das entsprechende Signal des Resonators zu erfassen bzw. zu empfangen.

Gemäß einem weiteren Aspekt der Erfindung ist die Steuerungseinheit ausgebildet, den Resonator kontinuierlich mit Schwingungen variabler Frequenz zu Schwingungen in dessen Eigenfrequenz anzuregen, dessen Schwingungen zu erfassen, aus der Resonanzfrequenz der erfassten Schwingungen die Übertragungsparametern zu bestimmen und aus den bestimmten Übertragungsparametern die mechanischen Normalspannungen zu bestimmen. Dies kann eine alternative Betriebsweise darstellen, den Resonator zu Schwingungen in seiner Eigenfrequenz anzuregen und das entsprechende Signal des Resonators zu erfassen bzw. zu empfangen.

Die vorliegende Erfindung betrifft auch einen Normalspannungssensor zur Verwendung in einer Vorrichtung zur Erfassung von mechanischen Normalspannungen in einem Elastomerbauteil wie zuvor beschrieben. Hierdurch kann ein Normalspannungssensor geschaffen werden, um die zuvor beschriebene Vorrichtung zu realisieren und dessen Eigenschaften und Vorteile nutzen zu können.

Die vorliegende Erfindung betrifft auch eine Steuerungseinheit zur Verwendung in einer Vorrichtung zur Erfassung von mechanischen Normalspannungen in einem Elastomerbauteil wie zuvor beschrieben. Hierdurch kann eine Steuerungseinheit geschaffen werden, um die zuvor beschriebene Vorrichtung zu realisieren und dessen Eigenschaften und Vorteile nutzen zu können. Auch kann die Steuerungseinheit universell verwendet werden, z.B. für ähnliche Vorrichtungen bzw. Mess-Systeme, bei entsprechender Anpassung der softwareseitigen Umsetzung der zuvor beschriebenen Funktionen auf den jeweiligen Anwendungsfall.

Mehrere Ausführungsbeispiele und weitere Vorteile der Erfindung werden nachstehend im Zusammenhang mit den folgenden Figuren schematisch dargestellt und erläutert. Darin zeigt:
- Fig. 1: einen Längsschnitt durch einen erfindungsgemäßen Normalspannungssensor;
- Fig. 2: einen Längsschnitt durch ein Elastomerbauteil gemäß einem ersten Ausführungsbeispiel mit dem erfindungsgemäßen Normalspannungssensor;
- Fig. 3: einen Querschnitt durch die Fig. 2;
- Fig. 4: einen Querschnitt durch eine erfindungsgemäße Vorrichtung zur Erfassung von mechanischen Normalspannungen in dem Elastomerbauteil der Fig. 2;
- Fig. 5: einen Querschnitt durch ein Elastomerbauteil gemäß einem zweiten Ausführungsbeispiel mit dem erfindungsgemäßen Normalspannungssensor; und
- Fig. 6: eine seitliche Ansicht auf das Elastomerbauteil der Fig. 5 bei Verwendung in einer Kupplung.

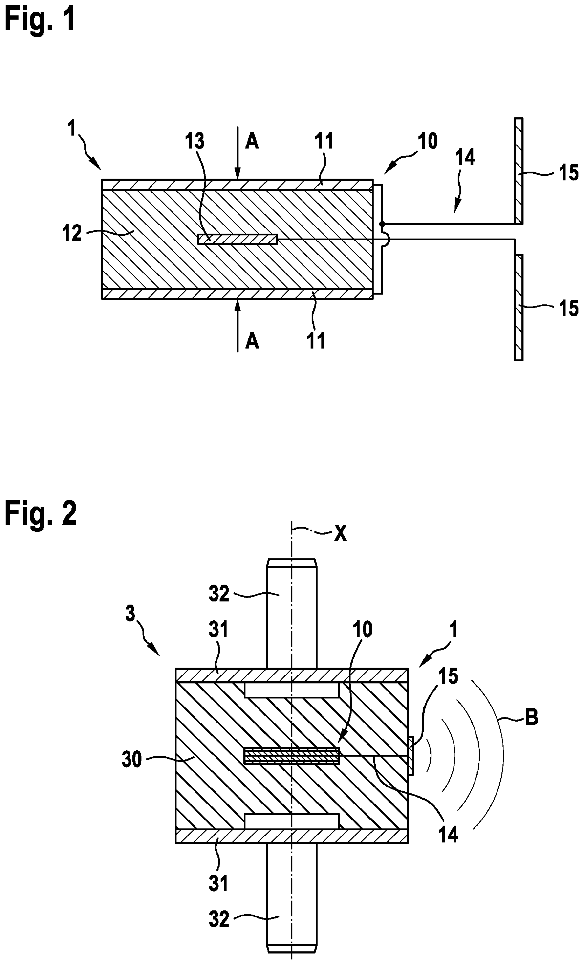

Fig. 1 zeigt einen Längsschnitt durch einen erfindungsgemäßen Normalspannungssensor 1. Der Normalspannungssensor 1 besteht aus einem Resonator 10, welcher über ein elektrisches Verbindungselement 14 in Form einer passiven Anpassungsschaltung 14, welche als dünne Leiterfolie umgesetzt ist, mit einer Antenne 15 verbunden ist. Der Resonator 10 ist als symmetrische Streifenleitung ausgebildet und besteht aus zwei elektrisch leitfähigen Leiterschichten 11, welche senkrecht zu ihrer flächigen Erstreckung zwischen sich ein Dielektrikum 12 aufnehmen. In dem Dielektrikum 12 ist ein elektrisch leitfähiger Leiterstreifen 13 derart eingebettet, dass sich der elektrisch leitfähige Leiterstreifen 13 in seiner flächigen Erstreckung parallel zu den beiden elektrisch leitfähigen Leiterschichten 11 erstreckt. Dabei ist die Antenne 15 als Dipol ausgebildet. Der elektrisch leitfähige Leiterstreifen 13 ist über das elektrische Verbindungselement 14 als Koaxialleitung (nicht dargestellt) bzw. über den Zentralleiter des elektrischen Verbindungselements 14 mit dem einen Teil der Antenne 15 und die beiden elektrisch leitfähigen Leiterschichten 11 über das elektrische Verbindungselement 14 bzw. dessen Mantelfläche mit dem anderen Teil der Antenne 15 als Masse elektrisch leitfähig verbunden. Alternativ zu einer Koaxialleitung als elektrisches Verbindungselement 14 kann auch eine Mikro-Streifenleitung als raumsparende Alternative verwendet werden.

Der Resonator 10 ist somit als symmetrische Streifenleitung, als sogenannte Stripline, ausgeführt. Auf den Normalspannungssensor 1 können senkrecht zur flächigen Erstreckung des Resonators 10 mechanische Normalspannungen A wirken und sensorisch erfasst werden, wie weiter unten näher beschrieben werden wird.

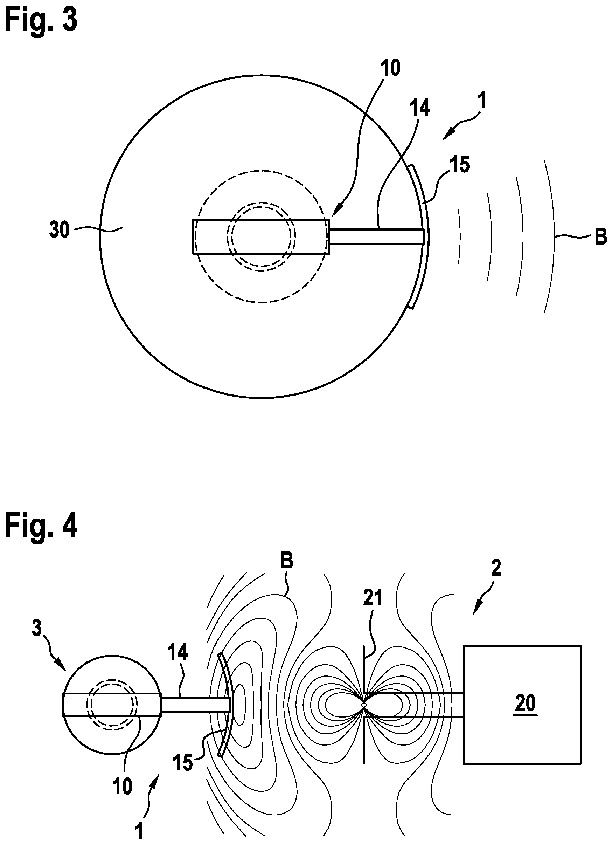

Fig. 2 zeigt einen Längsschnitt durch ein Elastomerbauteil 3 gemäß einem ersten Ausführungsbeispiel mit dem erfindungsgemäßen Normalspannungssensor 1. Fig. 3 zeigt einen Querschnitt durch die Fig. 2. Fig. 4 zeigt einen Querschnitt durch eine erfindungsgemäße Vorrichtung zur Erfassung von mechanischen Normalspannungen in dem Elastomerbauteil 3 der Fig. 2.

Das Elastomerbauteil 3 weist ein Elastomerelement 30 aus Gummi auf, in welches der Resonator 10 des Normalspannungssensors 1 eingebettet ist. Auch das elektrische Verbindungselement 14 des Normalspannungssensors 1 ist in das Elastomerelement 30 eingebettet, wohingegen die Antenne 15 seitlich außerhalb des Elastomerelements 30 angeordnet ist. Das Elastomerelement 30 ist entlang einer Längsachse X beidseitig jeweils mit einem mechanischen Anbindungselement 31 stoffschlüssig zum Beispiel durch Vulkanisation verbunden. Das mechanische Anbindungselement 31 ist jeweils feststehend mit einem mechanischen Verbindungselement 32 verbunden, mittels welchem das Elastomerbauteil 3 mit weiteren Bauteilen verbunden werden kann. Zu der erfindungsgemäßen Vorrichtung gehört ferner eine Steuerungseinheit 2 mit einer Sende-/Empfangseinheit 20 und mit einer Antenne 21.

Erfindungsgemäß wird somit das Elastomerbauteil 3 mit dem Resonator 10 als einem hochfrequenten Resonator 10 ausgestattet, dessen Eigenfrequenz von der zu messenden mechanischen Normalspannung A abhängt. Aus zwei Gründen wird der Resonator 10 auf eine Frequenz aus dem Mikrowellen-Band wie zum Beispiel 2,45 GHz gewählt. Zum einen lässt sich der Resonator 10 aufgrund seiner kleinen Abmessungen einfach in das Elastomerelement 30 des Elastomerbauteils 3 integrieren. Ferner tritt aufgrund der hohen Frequenz keine Wechselwirkung zwischen dem elektromagnetischen Feld des Resonators 10 und dem elastomeren Material des Elastomerelements 30 des Elastomerbauteils 3 auf, die sich negativ auf die Funktionsweise auswirken würde.

Die Antenne 15 des Resonators 10 des Normalspannungssensors 1 ist über ein elektromagnetisches Feld B mit der Sende-/Empfangseinheit 20 der Steuerungseinheit 2 gekoppelt, dessen Antenne 21 in geringem Abstand zu der Antenne 15 des Resonators 10 angeordnet ist. Der Sende-/Empfangseinheit 20 regt den Resonator 10 zu Schwingungen in seiner Eigenfrequenz an und empfängt das Signal des Resonators 10. Dies kann wenigstens dadurch erfolgen, dass die Sende-/Empfangseinheit 20 den Resonator 10 mit einem breitbandigen Impuls anregt und die Frequenz der Impulsantwort auswertet. Dies kann alternativ dadurch erfolgen, dass die Sende-/Empfangseinheit 20 den Resonator 10 kontinuierlich mit variabler Frequenz anregt (Wobbeln) und die Resonanzfrequenz aus den Übertragungsparametern (S-Parameter) ermittelt.

Wirken mechanische Normalkräfte bzw. mechanische Normalspannungen A auf das Elastomerelement 30 des Elastomerbauteils 3, komprimieren die mechanischen Normalspannungen A den Resonator 10 in gleichem Maße wie das Elastomer, welches den Resonator 10 umgibt. Dabei verändert sich der Abstand zwischen dem Leiterstreifen 13 und seinen äußeren leitfähigen weiteren Leiterschichten 11 und mit ihm die Resonanzfrequenz des Resonators 10. Dies kann von der Sende-/Empfangseinheit 20 erfasst und ausgewertet werden, um die mechanischen Normalspannungen A zu bestimmen.

Der Sende-/Empfangseinheit 20 ist als sogenanntes "Software Defined Radio" ausgeführt, dessen integrierte programmierbare Recheneinheit die o.g. Betriebsweisen realisieren und die Messwertsignale aus dem hochfrequenten Signal ermitteln kann.

Üblicherweise werden Streifenleitungen aus starren Materialien aufgebaut. Im Gegensatz dazu besteht der erfindungsgemäße Resonator 10 aus elastischen Materialien, deren mechanische Eigenschaften an die elastomere Umgebung angepasst sind, damit der Resonator 10 den elastischen Verformungen des Elastomerelements 30 des Elastomerbauteils 3 folgen kann.

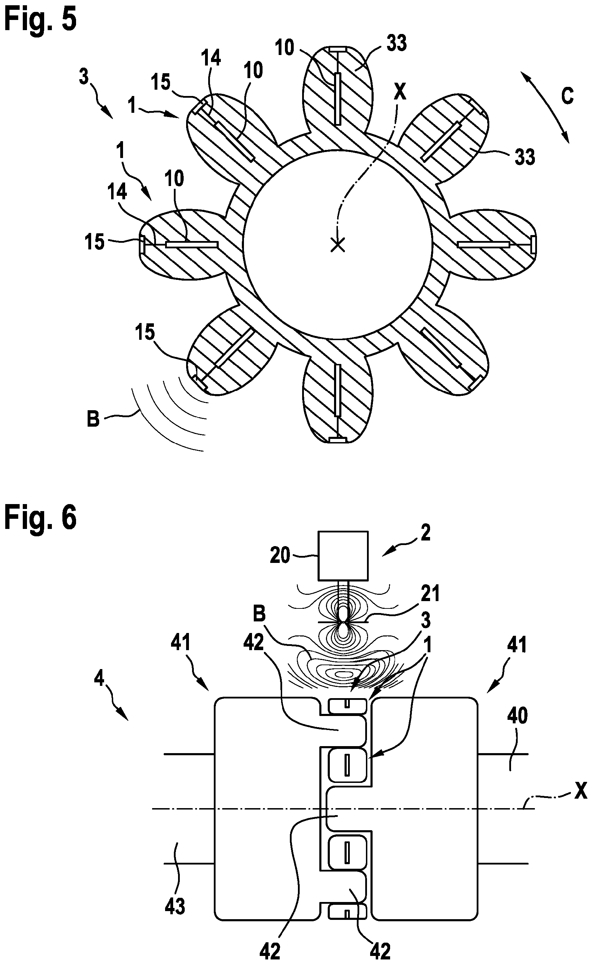

Fig. 5 zeigt einen Querschnitt durch ein Elastomerbauteil 3 gemäß einem zweiten Ausführungsbeispiel mit dem erfindungsgemäßen Normalspannungssensor 1. Fig. 6 zeigt eine seitliche Ansicht auf das Elastomerbauteil 3 der Fig. 5 bei Verwendung in einer Kupplung 4.

Der erfindungsgemäße Normalspannungssensor 1 kann zum Beispiel auch in dem Elastomerbauteil 3 der Fig. 5 und 6 bei einer Klauenkupplung 41 einer Kupplung 4 verwendet werden, um das übertragene Drehmoment während des Betriebes zu bestimmen. Die Kupplung 4 verbindet eine Antriebswelle 40 entlang einer Längsachse X mit einer Abtriebswelle 43, indem die Zähne 42 der Klauenkupplung 41 ineinandergreifen.

Zu diesem Zweck wird der Resonator 10 in wenigstens einem Zahn 33 und vorzugsweise, wie in den Fig. 5 und 6 dargestellt, in allen Zähnen 33 des Elastomerelements 30 des Elastomerbauteils 3 so eingebettet bzw. so integriert, dass der Resonator 10 dem Kraftfluss in Laufrichtung C der Klauenkupplung 41 ausgesetzt ist. Die mechanische Normalkraft A bzw. die mechanische Normalspannungen A komprimiert den erfindungsgemäßen Resonator 10. Eine optimale Kopplung wird erreicht, wenn die Antenne 21 der Sende-/Empfangseinheit 20 sich in Höhe der Antriebswelle 40 befindet.

Bei der Drehung der Antriebswelle 40 wird das elektromagnetische Feld B der Sende-/Empfangseinheit 20 durch die metallischen Teile der Klauenkupplung 41 zusätzlich moduliert. Aus dieser niederfrequenten Modulation lässt sich die aktuelle Drehzahl der Antriebswelle 40 berechnen. Auf die Auswertung des hochfrequenten Signals des Resonators 10 durch die Sende-/Empfangseinheit 20 hat die niederfrequente Modulation keinen Einfluss.

Solange der Resonator 10 bei Verformung durch die Kraft die Ausbreitung einer transversal-elektromagnetischen Welle zulässt, eignet sich ebenfalls ein zylindrischer Aufbau, bei dem der Leiterstreifen 13 auf der Längsachse X eines Zylinders verläuft, dessen leitfähiger Mantel die Gegenelektrode bildet.

Weitere Anwendungen für den erfindungsgemäßen Normalspannungssensor 1 bzw. für die hierauf aufbauende erfindungsgemäße Vorrichtung stellen elastische Elemente dar, welche auf Druck bzw. Zug beansprucht werden, wie zum Beispiel Federungselemente in Klauenkupplungen, Gummi-Metall-Federn, elastische Schläuche, Luftfedern und dergleichen.

### Bezugszeichenliste (Teil der Beschreibung)

- A: mechanische Normalspannungen bzw. Richtung der mechanischen Normalspannungen
- B: elektromagnetisches Feld
- C: Laufrichtung der Klauenkupplung 4
- X: Längsachse

- 1: Normalspannungssensor
- 10: Resonator; symmetrische Streifenleitung
- 11: Leiterschichten
- 12: Dielektrikum
- 13: Leiterstreifen
- 14: elektrisches Verbindungselement; passive Anpassungsschaltung
- 15: Antenne

- 2: Steuerungseinheit
- 20: Sende-/Empfangseinheit
- 21: Antenne

- 3: Elastomerbauteil
- 30: Elastomerelement
- 31: mechanische Anbindungselemente
- 32: mechanische Verbindungselemente
- 33: Zähne

- 4: Kupplung
- 40: Antriebswelle
- 41: Klauenkupplung
- 42: Zähne der Klauenkupplung 41
- 43: Abtriebswelle

## Patentansprüche

1. Vorrichtung zur Erfassung von mechanischen Normalspannungen (A) in einem Elastomerbauteil (3),
mit einem Elastomerbauteil (3),
mit wenigstens einem Normalspannungssensor (1),
wobei der Normalspannungssensor (1) wenigstens einen Resonator (10) aufweist, dessen Eigenfrequenz von den zu erfassenden mechanischen Normalspannungen (A), vorzugsweise zumindest im Wesentlichen linear, abhängig ist,
wobei wenigstens der Resonator (10) derart in das Elastomerbauteil (3) eingebettet ist, dass auf das Elastomerbauteil (3) wirkende mechanische Normalspannungen (A) die Eigenfrequenz des Resonators (10) verändern können, und
mit wenigstens einer Steuerungseinheit (2), welche ausgebildet ist, den Resonator (10) zu Schwingungen in dessen Eigenfrequenz anzuregen und dessen Schwingungen zu erfassen,
wobei die Steuerungseinheit (2) ferner ausgebildet ist, aus den erfassten Schwingungen des Resonators (10) die mechanischen Normalspannungen (A) des Elastomerbauteils (3) zu bestimmen.

2. Vorrichtung nach Anspruch 1, **dadurch gekennzeichnet, dass**
der Resonator (10) aus elastischen Materialien besteht.

3. Vorrichtung nach Anspruch 1 oder 2, **dadurch gekennzeichnet, dass**
der Resonator (10) als hochfrequenter Resonator (10) ausgebildet ist.

4. Vorrichtung nach einem der vorangehenden Ansprüche, **dadurch gekennzeichnet, dass**
der Resonator (10) senkrecht zur Richtung der mechanischen Normalspannungen (A) wenigstens ein Paar von elektrisch leitfähigen Leiterschichten (11) aufweist, zwischen denen wenigstens ein Dielektrikum (12) angeordnet ist,
wobei im Dielektrikum (12) wenigstens ein Leiterstreifen (13) angeordnet ist, welcher sich parallel zu den elektrisch leitfähigen Leiterschichten (11) erstreckt.

5. Vorrichtung nach einem der vorangehenden Ansprüche, **dadurch gekennzeichnet, dass**
der Resonator (10) sich flächig erstreckend ausgebildet ist,
wobei der Resonator (10) mit seiner flächigen Erstreckungsebene senkrecht zur Richtung der mechanischen Normalspannungen (A) in das Elastomerbauteil (3) eingebettet ist.

6. Vorrichtung nach einem der vorangehenden Ansprüche, **dadurch gekennzeichnet, dass**
der Normalspannungssensor (1) eine Antenne (15) aufweist, welche mittels eines elektrischen Verbindungselements (14) elektrisch leitfähig mit dem Resonator (10) verbunden ist, und
die Steuerungseinheit (2) eine Antenne (21) zur Erzeugung eines elektromagnetischen Feldes (B) zur elektromagnetischen Kopplung mit der Antenne (15) des Normalspannungssensors (1) aufweist.

7. Vorrichtung nach einem der vorangehenden Ansprüche, **dadurch gekennzeichnet, dass**
die Steuerungseinheit (2) ausgebildet ist, den Resonator (10) mittels breitbandiger Impulse zu Schwingungen in dessen Eigenfrequenz anzuregen, dessen Impulsantworten zu erfassen und aus den erfassten Impulsantworten die mechanischen Normalspannungen (A) zu bestimmen.

8. Vorrichtung nach einem der vorangehenden Ansprüche, **dadurch gekennzeichnet, dass**
die Steuerungseinheit (2) ausgebildet ist, den Resonator (10) kontinuierlich mit Schwingungen variabler Frequenz zu Schwingungen in dessen Eigenfrequenz anzuregen, dessen Schwingungen zu erfassen, aus der Resonanzfrequenz der erfassten Schwingungen die Übertragungsparametern zu bestimmen und aus den bestimmten Übertragungsparametern die mechanischen Normalspannungen (A) zu bestimmen.

9. Normalspannungssensor (1) zur Verwendung in einer Vorrichtung zur Erfassung von mechanischen Normalspannungen (A) in einem Elastomerbauteil (3) nach einem der Ansprüche 1 bis 8.

10. Steuerungseinheit (2) zur Verwendung in einer Vorrichtung zur Erfassung von mechanischen Normalspannungen (A) in einem Elastomerbauteil (3) nach einem der Ansprüche 1 bis 8.
